# EUROPEAN PATENT SPECIFICATION

(11) **EP 3 403 881 B1**
(45) Date of publication and mention of the grant of the patent: **20.11.2019**
(21) Application number: 18000447.5
(22) Date of filing: 11.05.2018
(51) Int. Cl.: B60R 9/10, B62H 3/00, B62H 3/02

(54) **DEVICE FOR HOLDING BICYCLES ON A BICYCLE-CARRIER**
VORRICHTUNG ZUM HALTEN VON FAHRRÄDERN AUF EINEM FAHRRADTRÄGER
DISPOSITIF POUR MAINTENIR DES BICYCLETTES SUR UN PORTE-BICYCLETTE

(30) Priority: 17.05.2017 IT 201700053122
(43) Date of publication of application: 21.11.2018
(73) Proprietor: Aurilis Group Italia S.R.L., 12045 Fossano (CN) (IT)
(72) Inventor: Gemesio, Matteo, I-12045 Fossano (CN) (IT)
(74) Representative: Garavelli, Paolo

(56) References cited:
- WO-A1-2014/096346
- DE-U1- 9 214 916
- DE-U1-202016 102 961
- FR-A1- 3 012 093

## Description

The present invention refers to a device for holding bicycles on a bicycle-carrier, in particular a bicycle-carrier for motor vehicles, for example of the type adapted to be assembled projecting on the rear wall of a motor vehicles, fastened to a tow hitch. In particular, the invention refers to a device for holding a bicycle in a vertical position, adapted to be fastened to the chassis of a bicycle and to the chassis of the bicycle-carrier, in order to allow an easy fastening of the bicycle by a single person.

Devices for holding bicycles on a bicycle-carrier are known in the art, comprising a bar equipped at its two ends with gripping means for assembling the device between a chassis of the bicycle-carrier and the bicycle, and with tensioning means of the gripping means, which keep said gripping means tightened.

EP-A1-2212156 discloses a device for holding bicycles comprising a bar equipped at its two ends with first catching means for fastening to the chassis of the bicycle-carrier comprising an annular clamp which can be opened, which has two jaws adapted to be mutually tightened around the chassis, and a connection which is fastened to the clamp to connect it to tensioning means of the gripping means; after they are manually closed by a user, the two jaws are blocked on the chassis of the bicycle-carrier, moving them through the tensioning means towards the bar in order to insert their ends inside the bar and keep them tightened.

This device has the problem that, in order to close the two jaws around the chassis of the bicycle-carrier, a user must manually operate on the jaws; such operation can be uncomfortable to perform, especially if a second bicycle is placed on the bicycle-carrier, making it difficult to access to the chassis to position the clamp jaws around the chassis and to close them around the chassis.

DE-U1-20 2016 102961 and FR-A1-3 012 093 disclose devices according to the preamble of Claim 1.

Object of the present invention is solving the above prior art problems, by providing a device for holding bicycles on a bicycle-carrier which allows a simple installation by an operator, without the need of having to access to the chassis of the bicycle-carrier to close the jaws around it, then keeping them blocked to anyway have a safe grip on the chassis and on the bicycle in order to lock it onto the bicycle-carrier.

The above and other objects and advantages of the invention, as will result from the following description, are obtained with a device for holding bicycles on a bicycle-carrier as claimed in Claim 1. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:

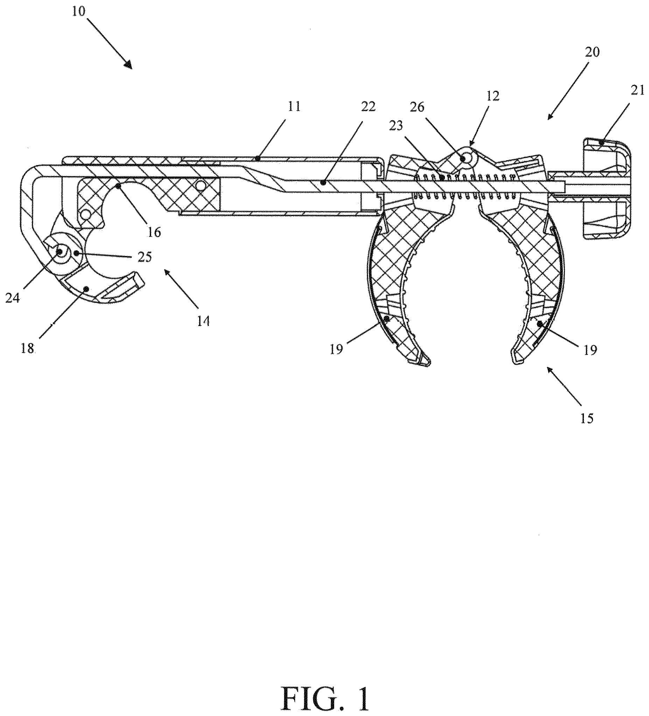

- Figure 1 is a front sectional view of an embodiment of a device for holding bicycles according to the present invention;

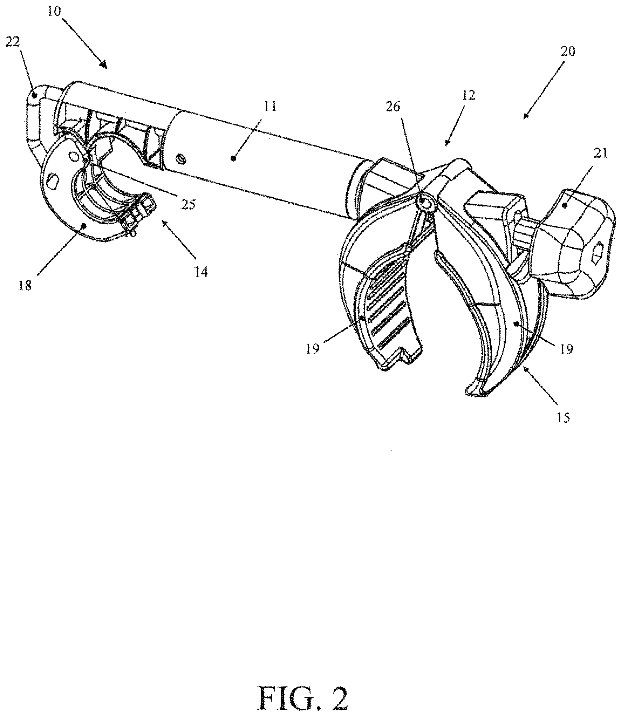

- Figure 2 is a perspective view of an embodiment of a device for holding bicycles according to the present invention;

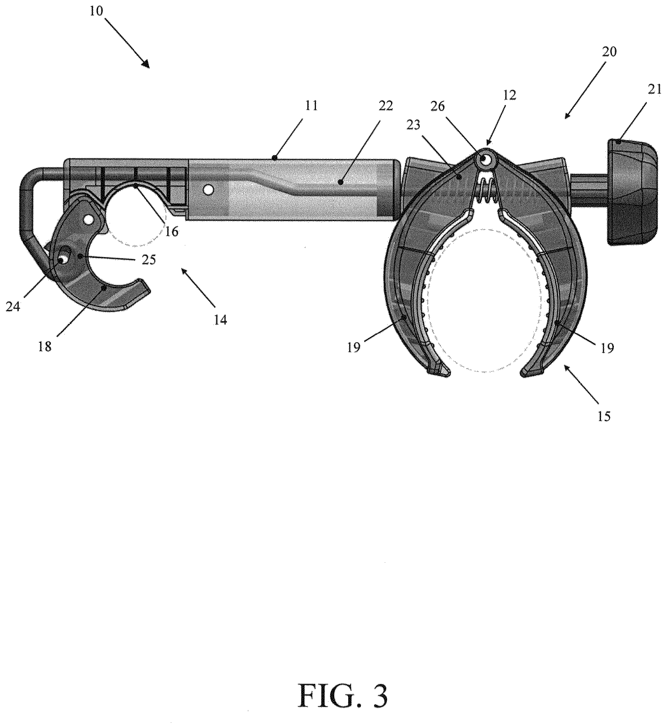

- Figure 3 is a front sectional view of an embodiment of a device for holding bicycles according to the present invention in an open configuration; and
- Figure 4 is a front sectional view of an embodiment of a device for holding bicycles according to the present invention in a closed configuration.

With reference to the Figures, the device 10 for holding bicycles on a bicycle-carrier of the present invention comprises a bar 11 having two ends, a first end connected to first catching means 14 adapted to lock the device 10 onto a chassis of the bicycle-carrier, and a second end connected to second catching means 15 adapted to lock the device 10 onto a chassis of a bicycle.

The device 10 for holding bicycles further comprises actuating means 20 connected to the first catching means 14 and to the second catching means 15 and adapted to close them and lock them respectively onto the chassis of the bicycle-carrier and onto the chassis of the bicycle, in order to keep the bicycle on the bicycle-carrier, preferably in a vertical position.

In a preferred way, the actuating means 20 are adapted to simultaneously close the first catching means 14 and the second catching means 15 and to keep them tightened to lock them respectively on the chassis of the bicycle-carrier and on the chassis of the bicycle.

Preferably, the first catching means 14 comprise a first jaw 16 fastened to the bar 11, and a second mobile jaw 18 adapted to be closed by the actuating means 20 against the first fixed jaw 16.

In a preferred way, the second mobile jaw 18 is rotatable connected to the first jaw 16, more preferably rotatable around a pin connected to the end of the second mobile jaw 18, which is far from the bar 11.

The second catching means 15, of a known type, comprise a nipper element 12 comprising two arms 19, preferably mutually pivoted at an end of the arms, in a fulcrum 26.

According to an embodiment of the invention, the actuating means 20 comprise a fitting element 22 connected to the second mobile jaw 18 and adapted to actuate it for rotating; the fitting element 22 is assembled sliding inside the bar 11 and the nipper element 12, preferably inside the arms 19 in an area adjacent to the fulcrum 26.

The fitting element 22, by sliding in the bar 11, generates the rotation of the second mobile jaw 18, acting on a pin 24 fastened thereto, closing the first catching means 14 onto the chassis of the bicycle-carrier.

The fitting element 22 is composed of a rod 22, obtained for example with a steel round rod and connected to the second mobile jaw 18, through an eyelet 25 obtained by bending an end of the rod 22, which engages the pin 24 fastened to the second mobile jaw 18, opposing the reaction of an elastic recall element 23, for example composed of a spring.

In a preferred way, the actuating means 20 further comprise a knob 21 connected to the fitting element 22 and adapted to actuate for rotating the second mobile jaw 18 through the fitting element 22.

Preferably, the knob 21 can be screwed in a threading obtained on the end of the rod opposite to the second mobile jaw 18, and is assembled in contact with the nipper element 12, preferably with its arms 19, in order to close it by pressing the arms 19 against the bar 11, making the rod 22 simultaneously slide inside the bar 11, in order to rotate the second mobile jaw 18 closing the first catching means 14.

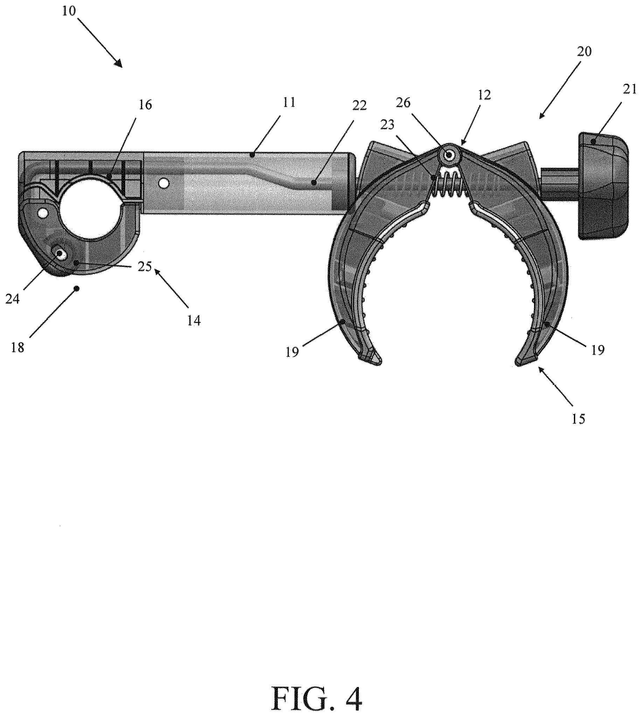

When the first catching means 14 and the second catching means 15 are closed respectively onto the chassis of the bicycle-carrier and onto the chassis of the bicycle, the knob 21 keeps the nipper element 12, in particular its arms 19, locked in a closing position, further blocking the second mobile jaw 18 through the rod 22, as shown in Figure 4.

Advantageously, the device for holding bicycles on a bicycle-carrier of the invention allows a user to easily install it, without the need of having to manually operate on the jaws to close them around the chassis of the bicycle-carrier, and further allows keeping the gripping means blocked in order to anyway have a safe grip onto the bicycle, keeping it fastened to the bicycle-carrier.

## Claims

1. Device (10) for holding bicycles on a bicycle-carrier comprising:
- a bar (11) having two ends, a first end connected to first catching means (14) adapted to lock the device (10) onto a chassis of the bicycle-carrier, and a second end connected to second catching means (15) adapted to lock the device (10) onto a chassis of a bicycle, the first catching means (14) comprising a first jaw (16) fastened to the bar (11), and a second mobile jaw (18) adapted to be closed by the actuating means (20) against the first fixed jaw (16), the second catching means (15) comprising a nipper element (12) comprising two, mutually pivoted arms (19); and
- actuating means (20) connected to the first catching means (14) and to the second catching means (15) and adapted to close them and lock them respectively onto the chassis of the bicycle-carrier and onto the chassis of the bicycle;
wherein the actuating means (20) comprise a fitting element (22) connected to the second mobile jaw (18) and adapted to actuate it for rotating, said fitting element (22) being assembled sliding inside the bar (11) and the nipper element (12),
**characterized in that** the fitting element (22) is composed of a rod (22) connected to the second mobile jaw (18) through an eyelet (25) obtained by bending an end of the rod (22) which engages a pin (24) fastened to the second mobile jaw (18).

2. Device (10) for holding bicycles on a bicycle-carrier according to claim 1, **characterized in that** the actuating means (20) are adapted to simultaneously close the first catching means (14) and the second catching means (15) and to keep them tightened to lock them respectively onto the chassis of the bicycle-carrier and onto the chassis of the bicycle.

3. Device (10) for holding bicycles on a bicycle-carrier according to any one of the previous claims, **characterized in that** the second mobile jaw (18) is connected rotatable to the first jaw (16).

4. Device (10) for holding bicycles on a bicycle-carrier according to claim 3, **characterized in that** the second mobile jaw (18) is rotatable around a pin connected at the end of the second mobile jaw (18) which is far from the bar (11) .

5. Device (10) for holding bicycles on a bicycle-carrier according to claim 1 or 4, **characterized in that** the actuating means (20) further comprise a knob (21) connected to the fitting element (22) and adapted to actuate for rotating the second mobile jaw (18) through the fitting element (22).

6. Device (10) for holding bicycles on a bicycle-carrier according to claim 5, **characterized in that** the knob (21) is screwed in a threading obtained on the end of the rod (22) opposite to the second mobile jaw (18), and is assembled in contact with the nipper element (12), in order to close it by pressing the arms (19) against the bar (11), making the rod (22) simultaneously slide inside the bar (11) in order to rotate the second mobile jaw (18) closing the first catching means (14), and keep then blocked the nipper element (12) and the second mobile jaw (18) in a closing position through the rod (22) when the first catching means (14) and the second catching means (15) are closed respectively on the chassis of the bicycle-carrier and on the chassis of the bicycle.

## Patentansprüche

1. Vorrichtung (10) zum Festhalten von Fahrrädern auf einem Fahrradträger, die Folgendes enthält:
- eine Stange (11) mit zwei Enden, ein erstes Ende ist mit den ersten Aufnahmevorrichtungen (14) verbunden, die dazu dienen, die Vorrichtung (10) an einem Rahmen des Fahrradträgers zu blockieren, und ein zweites Ende ist mit den zweiten Aufnahmevorrichtungen (15) verbunden, die dazu dienen, die Vorrichtung (10) an einem Fahrradrahmen zu blockieren, die ersten Aufnahmevorrichtungen (14) enthalten eine erste Spannbacke (16), die an der Stange (11) befestigt ist, und eine bewegliche zweite Spannbacke (18), die dazu dient, von den Antriebsmitteln (20) an der festen ersten Spannbacke (16) geschlossen zu werden, die zweiten Aufnahmevorrichtungen (15) enthalten ein Zangenelement (12) mit zwei Armen (19), die drehbar miteinander verbunden sind; und
- Antriebsmittel (20), die mit den ersten Aufnahmevorrichtungen (14) und mit den zweiten Aufnahmevorrichtungen (15) verbunden sind und dazu dienen, diese jeweils am Rahmen des Fahrradträgers und am Fahrradrahmen zu schließen und zu blockieren;
wobei die Antriebsmittel (20) ein Anschlusselement (22) enthalten, das mit der beweglichen Spannbacke (18) verbunden ist und dazu dient, diese in Drehung zu versetzen, das genannte Anschlusselement (22) ist verschiebbar intern in der Stange (11) und im Zangenelement (12) montiert,
und **dadurch gekennzeichnet ist, dass** das Anschlusselement (22) aus einem Schaft (22) besteht, der mit der beweglichen zweiten Spannbacke (18) durch eine Öse (25) verbunden ist, die durch Biegen eines Schaftendes (22) angefertigt wurde, welche einen Bolzen (24) spannt, der an der beweglichen zweiten Spannbacke (18) befestigt ist.

2. Vorrichtung (10) zum Festhalten von Fahrrädern auf einem Fahrradträger gemäß Patentanspruch 1, die **dadurch gekennzeichnet ist, dass** die Antriebsmittel (20) dazu dienen, gleichzeitig die ersten Aufnahmevorrichtungen (14) und die zweiten Aufnahmevorrichtungen (15) zu schließen und diese festgezogen zu halten, um sie jeweils am Rahmen des Fahrradträgers und am Fahrradrahmen zu blockieren.

3. Vorrichtung (10) zum Festhalten von Fahrrädern auf einem Fahrradträger gemäß einem beliebigen der vorhergehenden Patentansprüche, die **dadurch gekennzeichnet ist, dass** die bewegliche zweite Spannbacke (18) drehbar mit der ersten Spannbacke (16) verbunden ist.

4. Vorrichtung (10) zum Festhalten von Fahrrädern auf einem Fahrradträger gemäß Patentanspruch 3, die **dadurch gekennzeichnet ist, dass** die bewegliche zweite Spannbacke (18) drehbar an einem Bolzen ist, der mit dem Ende der beweglichen zweiten Spannbacke (18) verbunden ist, die von der Stange (11) entfernt ist.

5. Vorrichtung (10) zum Festhalten von Fahrrädern auf einem Fahrradträger gemäß Patentanspruch 1 oder 4, die **dadurch gekennzeichnet ist, dass** die Antriebsmittel (20) außerdem einen Knopf (21) enthalten, der mit dem Anschlusselement (22) verbunden ist und dazu dient, die bewegliche zweite Spannbacke (18) durch das Anschlusselement (22) in Drehung zu versetzen.

6. Vorrichtung (10) zum Festhalten von Fahrrädern auf einem Fahrradträger gemäß Patentanspruch 5, die **dadurch gekennzeichnet ist, dass** der Knopf (21) in einem Gewinde eingeschraubt ist, das am Schaftende (22) gegenüber der beweglichen zweiten Spannbacke (18) angefertigt wurde, und in Kontakt mit dem Zangenelement (12) montiert ist, um es durch Drücken der Arme (19) an die Stange (11) zu schließen, wobei gleichzeitig der Schaft (22) intern in der Stange (11) gleitet, sodass die bewegliche zweite Spannbacke (18) gedreht wird und die ersten Aufnahmevorrichtungen (14) schließt und dann das Zangenelement (12) und die bewegliche zweite Spannbacke (18) durch den Schaft (22) in der Verschlussposition blockiert, wenn die ersten Aufnahmevorrichtungen (14) und die zweiten Aufnahmevorrichtungen (15) jeweils am Rahmen des Fahrradträgers und am Fahrradrahmen geschlossen sind.

## Revendications

1. Dispositif (10) de rétention pour vélos sur un porte-vélos comprenant :
- une barre (11) ayant deux extrémités, une première extrémité reliée aux premiers moyens de préhension (14) qui sont aptes à bloquer le dispositif (10) à un châssis du porte-vélos et une seconde extrémité reliée à des seconds moyens de préhension (15) qui sont aptes à bloquer le dispositif (10) à un châssis d'un vélo ; les premiers moyens de préhension (14) comprennent une première mâchoire (16) fixée à la barre (11), et une seconde mâchoire (18) mobile apte à être fermée par des moyens d'actionnement (20) contre la première mâchoire (16) fixe ; les second moyens de préhension (15) comprennent un élément à pince (12) doté de deux bras (19) fixés sur le même pivot ; et
- des moyens d'actionnement (20) reliés aux premiers moyens de préhension (14) et aux seconds moyens de préhension (15) qui sont aptes à les fermer et les bloquer respectivement sur le châssis du porte-vélos et le châssis du vélo ;
où les moyens d'actionnement (20) comprennent un élément de raccord (22) relié à la seconde mâchoire mobile (18) qui est apte à l'actionner en rotation; l'élément de raccord (22) est monté de manière à glisser à l'intérieur de la barre (11) et de l'élément à pince (12),
**caractérisé en ce que** l'élément de raccord (22) est constitué d'une tige (22) reliée à la seconde mâchoire mobile (18) par l'intermédiaire d'un œillet (25) réalisé en pliant une première extrémité de la tige (22) qui engage un pivot (24) fixé à la seconde mâchoire mobile (18).

2. Dispositif (10) de rétention pour vélos sur un porte-vélos, selon la revendication 1, **caractérisé en ce que** les moyens d'actionnement (20) sont aptes à fermer simultanément les premiers moyens de préhension (14) et les seconds moyens de préhension (15) mais aussi à les maintenir serrés pour les bloquer respectivement sur le châssis porte-vélos et le châssis du vélo.

3. Dispositif (10) de rétention pour vélos sur un porte-vélos, selon l'une des revendications précédentes, **caractérisé en ce que** la seconde mâchoire mobile (18) est reliée de sorte à pivoter sur la première mâchoire (16).

4. Dispositif (10) de rétention pour vélos sur un porte-vélos, selon la revendication 3, **caractérisé en ce que** la seconde mâchoire mobile (18) est montée de sorte à pivoter sur un pivot relié à l'extrémité de la seconde mâchoire (18) mobile qui est éloignée de la barre (11).

5. Dispositif (10) de rétention pour vélos sur un porte-vélos, selon la revendication 1 ou 4, **caractérisé en ce que** les moyens d'actionnement (20) comprennent aussi un bouton (21) relié à l'élément de raccord (22) qui est apte à actionner en rotation la seconde mâchoire mobile (18) à travers l'élément de raccord (22).

6. Dispositif (10) de rétention pour vélos sur un porte-vélos, selon la revendication 5, **caractérisé en ce que** le bouton (21) est vissé dans un filetage réalisé sur l'extrémité de la tige (22) opposée à la seconde mâchoire mobile (18), et est monté au contact de l'élément à pince (12), de sorte à le fermer en pressant les bras (19) contre la barre (11), tout en faisant glisser la tige (22) à l'intérieur de la barre (11) afin de tourner la seconde mâchoire mobile (18) en fermant les premiers moyens de préhension (14), puis à maintenir bloqués en position de fermeture l'élément à pince (12) et la seconde mâchoire mobile (18) au moyen de la tige (22) quand les premiers moyens de préhension (14) et les seconds moyens de préhension (15) sont fermés respectivement sur le châssis du porte-vélos et le châssis du vélo.
